## Europäisches Patentamt
## European Patent Office
## Office européen des brevets

(19)

(11) Veröffentlichungsnummer: **0 083 048**
**B1**

(12) # EUROPÄISCHE PATENTSCHRIFT

(45) Veröffentlichungstag der Patentschrift:
19.03.86

(51) Int. Cl.⁴: **B 60 H 1/00**, G 05 D 23/20

(21) Anmeldenummer: **82111779.3**

(22) Anmeldetag: **18.12.82**

(54) Regeleinrichtung für eine Heiz- und/oder Klimaanlage von Kraftfahrzeugen.

(30) Priorität: 24.12.81 DE 3151255
05.11.82 DE 3240947

(43) Veröffentlichungstag der Anmeldung:
06.07.83 Patentblatt 83/27

(45) Bekanntmachung des Hinweises auf die Patenterteilung:
19.03.86 Patentblatt 86/12

(84) Benannte Vertragsstaaten:
FR GB IT SE

(56) Entgegenhaltungen:
EP - A - 0 013 298
EP - A - 0 039 846
DE - A - 2 904 134
FR - A - 2 437 312

(73) Patentinhaber: **BAYERISCHE MOTOREN WERKE Aktiengesellschaft, Postfach 40 02 40 Petuelring 130, D-8000 München 40 (DE)**

(72) Erfinder: **Rathgeber, Gerhard, Dipl.-Ing., Möwenstrasse 15, D-8011 Pliening-Landsham (DE)**
Erfinder: **Busch, Lothar, Ing. grad., Frauwiesenweg 27, D-8031 Gilching (DE)**
Erfinder: **Schicktanz, Norbert, Dipl.-Ing., Bahnhofstrasse 94, D-8032 Gräfelfing (DE)**

(74) Vertreter: **Bullwein, Fritz, Bayerische Motoren Werke Aktiengesellschaft Postfach 40 02 40 Petuelring 130 AJ-33, D-8000 München 40 (DE)**

LIBER, STOCKHOLM 1986

## Beschreibung

Die Erfindung bezieht sich auf eine Regeleinrichtung für eine Heizoder Klimaanlage von Kraftfahrzeugen, mit zwei verschiedenen Bereichen des Innenraums zugeordneten Wärmetauschern oder Wärmetauscherbereichen, die jeweils durch ein Stellglied entsprechend einem zugeordneten Sollwertgeber gesteuert oder eingeschaltet sind, mit einem Regler, der die Stellglieder steuert und an dessen Eingang ein einziger Innentemperaturfühler und die beiden Sollwertgeber angeschlossen sind, und mit Mitteln bei einer Versteilung eines Soliwertgebers eine Verstellung des Stellglieds für den jeweils anderen Wärmetauscher zu vermeiden.

Eine derartige Regeleinrichtung ist aus der EP-A-13 298 bekannt. Dabei werden die beiden Stellglieder indirekt über den Regier gesteuert. Durch Überkreuzkopplung der beiden Sollwertgeber und der beiden Stellglieder soll erreicht werden, daß die Veränderung eines Sollwertgebers ohne Einfluß auf den Wärmetauscher des anderen Bereichs ist.

Diese unerwünschte Verstellung des Stellglieds für den Wärmetauscher des anderen Bereichs wird jedoch lediglich zum Zeitpunkt der Änderung des einen Sollwertgebers vermieden. Die Anderung des Sollwertgebers hat für den zugehörigen Bereich eine entsprechende Temperaturänderung zur Folge. Der gemeinsame Innentemperaturfühler teilt damit dem Regler ebenfalls eine Temperaturänderung im selben Sinne mit. Der Regler steuert nun die beiden Stellglieder im gleichen Sinn und in der Weise, diese Temperaturänderung zumindest teilweise zu kompensieren. Dies hat insbesondere für den Bereich, dessen Sollwertgeber nicht geändert wurde und dessen Temperatur zunächst gleich geblieben ist, nach einer gewissen Zeit eine Temperaturänderung zur Folge, die der des anderen Bereichs entgegengesetzt ist. Die Dauer, nach der diese Temperaturänderung eintritt, ist im wesentlichen von den fahrzeugspezifischen Gegebenheiten abhängig.

Der Erfindung liegt die Aufgabe zugrunde, eine Regeleinrichtung der eingangs genannten Art zu schaffen, die mit geringem Aufwand eine individuelle Temperatureinstellung der beiden Bereiche ohne Beeinflussung der Temperatur des jeweils anderen Bereichs gerade in der Übergangsphase zum stabilen Heizungsbetrieb erreicht.

Die Lösung dieser Aufgabe ist dadurch gekennzeichnet, daß die Stellglieder durch die zugehörigen Sollwertgeber direkt angesteuert sind, daß ein Verzögerungsnetzwerk angesteuert von den Sollwertgebern ein dem Ausgangssignal des Innentemperaturfühlers entsprechendes Ausgangssignal erzeugt und daß die Differenz aus dem Ausgangssignal des Verzögerungsnetzwerks und des Innentemperaturfühlers dem Regler zugeführt ist.

Die direkte Ansteuerung der Stellglieder ist schaltungsmäßig besonders einfach und ermöglicht eine individuelle relative Temperaturwahl in diesem Bereich. Der Grundgedanke der Erfindung besteht darin, die sich bei einer gewünschten Temperaturänderung eines Bereichs ergebende Auswirkung auf den einzigen Innentemperaturfühler durch eine zeitlich und betragsmäßig etwa gleich verlaufende und zumindest annähernd entgegengesetzt wirkende, von dem verstellten Sollwertgeber herrührende Änderung am Reglereingang zu kompensieren. Damit bleibt der Reglerausgang zeitlich zumindest weitgehend unverändert.

Die Arbeitsweise der Verzögerungsmittel, d.h. insbesondere der Wirkdauer und Wirkintensität, hängt in erster Linie von den spezifischen Gegebenheiten des Fahrzeuginnenraums ab. In erster Näherung kann die Verzögerung einen konstanten zeitlichen Wert besitzen. Demgegenüber ermögiicht eine Verzögerung mit veränder-licher Zeitdauer eine verbesserte Realisierung der Erfindung. Diese variable Verzögerung kann vom Ausgangssignal des bzw. der Sollwertgeber abhängen.

Die Veränderung dieser Dauer kann auch in Abhängigkeit von den verschiedenen Einflußgrößen der Regeleinrichtung erfolgen. Als dominierender Faktor ist dabei die Heizleistung zu nennen.

Die Heizieistung ihrerseits hängt zunächst ab von der Temperatur und Größe der Wärmetauscher-Oberflächen. Unter der Annahme des bereits nach kurzem Fahrbetrieb voriiegenden Sättigungsbetriebs der Wärmetauscher ist die Heizleistung dann im wesentlichen abhängig von der über den Wärmetauscher geführten Luftmenge. Macht man die Verzögerungsdauer ausschließlich oder im wesentlichen von dieser Luftmenge abhängig, so ermöglicht dies eine nahezu vollständige Anpassung am Reglereingang der beiden Änderungen, die durch den Sollwertgeber und den Innentemperaturfühler hervorgerufen werden.

Die über den Wärmetauscher geführte Luftmenge kann auf besonders einfache Weise aus der Einstellung eines Luftmengenwählers entnommen werden.

Die Erfindung kann neben einer Links/-Rechts-Aufteilung des Fahrzeuginnenraums auch bei einer Oben/Unten-Aufteilung bzw. umgekehrt angewandt werden. Alle Sollwertgeber für diese Aufteilungen können auf ein gemeinsames Verzögerungsmittel und direkt auf die zugehörigen Stellglieder geführt werden. Bel einer zusätzlichen Oben/Unten-Aufteilung mit Hilfe eines Sollwertgebers sind damit insgesamt drei Sollwertgeber auf das Verzögerungsmittel geführt.

Die Erfindung ist anhand eines in der Zeichnung dargestellten Ausführungsbeispiels näher erläutert. Dabei zeigen

Fig. 1 das Blockschaltbild einer erfindungsgemäßen Regeleinrichtung,

Fig. 2 die schaltungstechnische Realisierung des in Fig. 1 dargestellten Verzögerungsnetzwerks und

Fig. 3 das Verhalten der Regeleinrichtung anhand von mehreren Diagrammen und

Fig. 4 eine gegenüber Fig.1 erweiterte Regeleinrichtung.

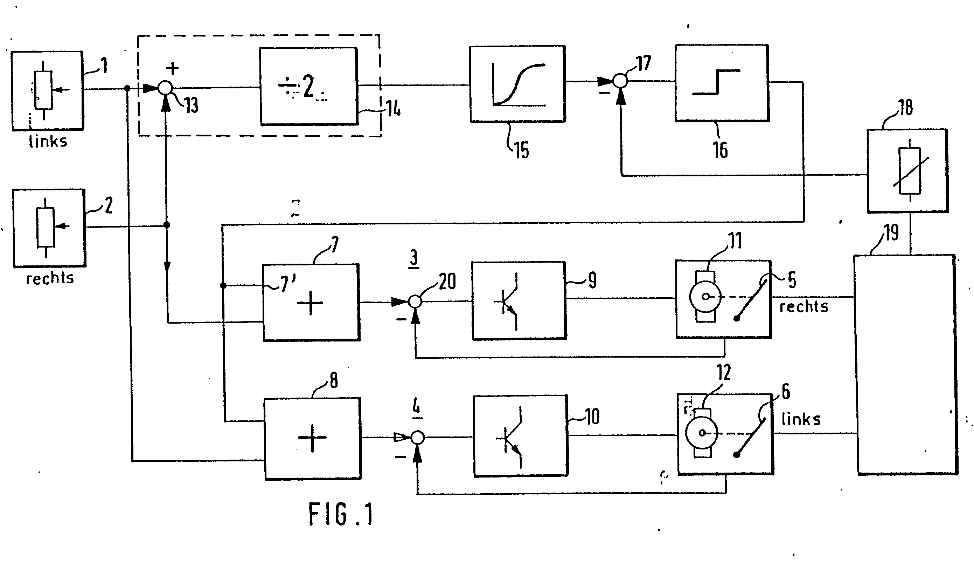

Die in Fig. 1 gezeigte Regeleinrichtung enthält zwei Sollwertgeber 1 und 2, die zwei Bereichen des Innenraums eines Kraftfahrzeugs, beispielsweise der linken und rechten Seite zugeordnet sind. Die Geber 1 und 2 wirken direkt auf Stellglieder 3 und 4 für Temperaturmischklappen 5 und 6 ein, die nicht dargestellten Wärmetauschern der beiden Bereiche zugeordnet sind und individuell die über die Wärmetauscher bzw. daran vorbei geführte Luftmenge einstellen.

Die Stellglieder 3 und 4 bestehen aus Summierern 7 und 8, Motorsteuerungen 9 und 10 sowie Stellmotoren 11 und 12 für die Temperaturmischklappen 5 und 6.

Die Sollwertgeber 1 und 2 sind ferner über einen aus Addierstelle 13 und Halbierer 14 bestehenden Mittelwertbilder und ein Verzögerungsnetzwerk 15 an einem Regler 16 angeschlossen, dessen Ausgangssignal auf die Summierer 7 und 8 geführt ist. Am Eingang des Reglers 16 ist über eine Subtrahierstelle 17 ein Innentemperaturfühler 18 angeschlossen, der an einer zentralen Stelle des Fahrgastraums 19 angeordnet ist.

Ausgehend von einer Situation, in der der Regler 16 dynamisch nicht wirksam ist, soll der Sollwertgeber für "rechts" d. h. der Sollwertgeber 2 in definierter Weise verstellt werden, um beispielsweise die Temperatur auf der rechten Seite zu erhöhen. Dadurch wird das Stellglied 3 unmittelbar angesteuert und die Temperaturmischklappe 5 durch den Stellmotor 11 so bewegt, daß sie mehr Luft über den zugehörigen Wärmetauscher führt. Die Einstellung der Temperaturmischklappe 5 wird auf eine Subtrahierstelle 20 zwischen dem Summierer 7 und der Motorsteuerung 9 zurückgeführt und dadurch in der durch den Summierer 7 bzw. den Sollwertgeber 2 vorgesehenen Weise exakt eingestellt.

Die Änderung des Sollwertgebers 2 gelangt über den Mittelwertbilder 13, 14 und das Verzögerungsnetzwerk 15 auch auf den Regler 16. Die Wirkungsweise des Verzögerungsnetzwerks 15 ist dabei so, daß diese Veränderung erst dann an die Subtrahierstelle 17 weitergegeben wird, wenn sich die Temperatur der rechten Seite durch Änderung der Einstellung der Temperaturmischklappe 6 für den Innentemperaturfühler 18 merkbar erhöht hat und durch diesen ebenfalls an die Subtrahierstelle 17 weitergegeben wird. Da der Innentemperaturfühler 18 praktisch den Mittelwert der Temperaturen der beiden Bereiche bestimmt und durch den Mittelwertbilder 14 der Ausgangssignale der beiden Sollwertgeber 1 und 2 gebildet wird, ist die an der Subtrahierstelle 17 auftretende Signaländerung der Ausgänge von Verzögerungsnetzwerk 15 und Innentemperaturfühler 18 während der gesamten Änderung zumindest annähernd gleich. Der Regler 16 bleibt daher eingangsseitig unverändert und beeinflußt daher auch während der gesamten Änderung der Temperatur des rechten Bereichs die beiden Stellglieder 3 und 4 nicht. Dadurch ist es möglich, die Temperatur auf einer Seite zu verändern, ohne daß dadurch eine Beeinträchtigung der Temperatur der anderen Seite hervorgerufen wird.

Der Regler 16 arbeitet erst dann und führt zu einer gleichgerichteten Beeinflussung der beiden Stellglieder 3 und 4, wenn der Innentemperaturfühler eine Temperaturänderung anzeigt der keine entsprechende Änderung eines der beiden Sollwertgeber 1 und 2 bzw. beider Geber gegenübersteht.

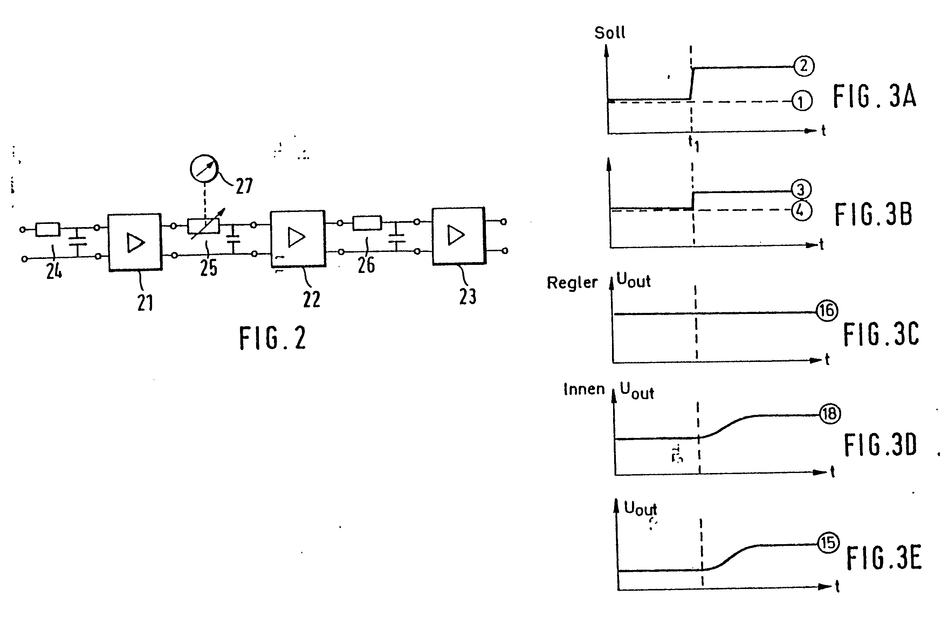

Die in Fig. 2 gezeigte schaltungstechnische Realisierung des Verzögerungsnetzwerks 15 besteht im wesentlichen aus drei Verstärkern 21, 22 und 23 und zugeordneten RC-Gliedern 24 bis 26, mit denen das Zeitverhalten der Stellglieder 3 bzw. 4, des Fahrgastraums 19 als Regelstrecke und des Innentemperaturfühlers 18 nachgebildet werden.

Die RC-Glieder 24 bis 26 bestehen aus je einem Widerstand und einem Kondensator. Der Widerstand des RC-Glieds 25 ist dabei variabel und wird entsprechend der Stellung eines Luftmengenwählrads (Gebläsestufenwähler) der Anlage eingestellt. Hierfür dient zumeist ein Gebläsestufenschalter 27, wobei die weiteren Einflußgrößen Staudruck und Fahrgeschwindigkeit entsprechend berücksichtigt werden. Dadurch wird es möglich, das bei Sättigungsbetrieb der Wärmetauscher im wesentlichen lediglich von der zugeführten Luftmenge und damit der Heizleistung abhängige Temperaturverhalten des Innenraums zu berücksichtigen. Ist diese Menge groß, so ändert der jeweilige Bereich schneller seine Temperatur bei Verstellung des zugehörigen Sollwertgebers als bei geringer Luftmenge. Jede am Eingang der Verstärkerkette 21 bis 23 auftretende Spannungsänderung - diese ergibt sich wie die Ausgangsspannung als das Ausgangssignal des Mittelwertbilders 13, 14 in Fig. 1 - wird in der Verstärkerkette in der gleichen Weise verzögert, in der sich die durch den Innentemperaturfühler 18 an die Subtrahierstelle 17 weitergegebene Temperaturänderung des Fahrgastraums auswirkt.

Diese Auswirkung ist schematisch anhand der Diagramme von Fig. 3 erläutert. Ausgehend von einer gleichen Einstellung der beiden Sollwertgeber 1 und 2 soll der Sollwertgeber 2 für die rechte Seite für eine Temperaturerhöhung dieses Bereichs verändert werden. Das Ausgangssignal des Sollwertgebers 2 zeigt damit das dargestellte Sprungverhalten, während das strichliert eingezeichnete Ausgangssignal des Sollwertgebers 1 unverändert bleibt (Diagramm a).

Die Stellgrößen 3 und 4 erhalten an ihrem Eingang ein Signal, das unter der angenommenen Kompensation der beiden an der Subtrahierstelle 17 auftretenden Signaländerung allein durch die Einstellung der Sollwertgeber 1 und 2 bestimmt ist und das daher ebenfalls eine entsprechende Sprungfunktion für das Stellglied 3 bzw. einen geraden, strichliert gezeichneten Verlauf für das Stellglied 4 zeigt (Diagramm b).

Der Regler 16 bleibt unter dieser Annahme während der gesamten Dauer der Temperaturänderung des rechten Bereichs und auch nach deren Abschluß eingangsseitig unverändert und liefert daher ein gleichbleibendes Ausgangssignal, das ohne zusätzliche, durch den Innentemperaturfühler 18 aufgenommende Störeinflüsse für die Temperatur des Fahrgastraums 19 konstant ist (Diagramm c).

Bei der betrachteten einseitigen Verstellung, d. h. der Verstellung lediglich des Sollwertgebers 2 liefert der Innentemperaturfühler 18 ein Ausgangssignal, das im Diagramm d wiedergegeben ist und das durch einen Anstieg nach Verstellen des Sollwertgebers 2 bis zum Erreichen eines neuen Niveaus nach Beendigung der Temperaturänderung des, rechten Bereichs gekennzeichnet ist.

Schließlich zeigt Diagramm e die Wirkungsweise des Verzögerungsnetzwerks 15 im betrachteten Fall. Die von diesem an die Subtrahierstelle 17 gelieferte Ausgangsspannung ist der des Innentemperaturfühlers 18 gleich und ebenfalls durch einen entsprechenden Anstieg zwischen dem Ausgangs- und dem Endniveau gekennzeichnet.

Wie insbesondere aus den Diagrammen d und e zu erkennen ist, heben sich im betrachteten Fall die Ausgangssignale des Innentemperaturfühlers 18 und des Verzögerungsnetzwerks 15 auf, so daß der Reglereingang 16 unbeeinflußt bleibt. Die Verstellung eines der Sollwertgeber bzw. beider gemeinsam führt, eine ideale Anpassung des Verzögerungsnetzwerks 15 und das Fehlen zusätzlicher Störeinflüsse vorausgesetzt, lediglich zur direkten Ansteuerung der Stellglieder 3 und 4 ohne zusätzlichen Einfluß des Reglers 16.

Durch die Erfindung wird damit eine tatsächlich voneinander unabhängige individuelle Einstellung der Temperaturen in zwei Bereichen des Fahrgastraums trotz des nur einzigen Innentemperaturfühlers ermöglicht. Diese Entkopplung wird sogar nach Beendigung der Temperaturänderung des bzw. der Bereiche aufrechterhalten.

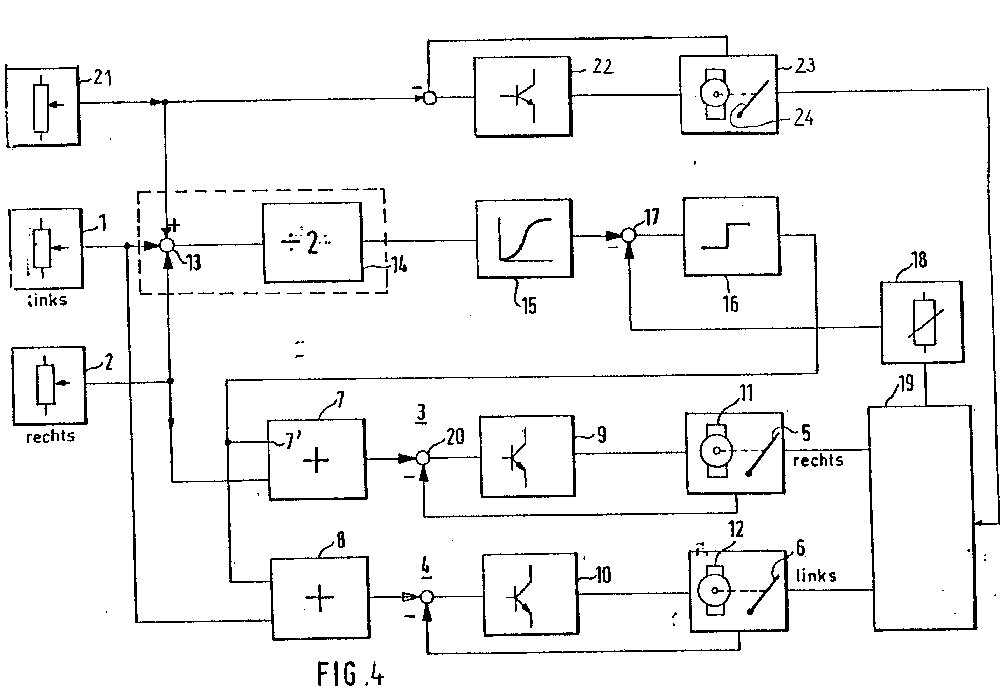

Die in Fig. 4 gezeigte Regeleinrichtung ist nun um die Möglichkeit erweitert, auch den Kopfbereich des Fahrgastraums gegenüber dem Fußbereich in seiner Temperatur zu verändern. Hierzu dient der Sollwertgeber 21, der direkt auf eine Motorsteuerung 22 für einen Stellmotor 23 wirkt. Dieser steuert eine Temperaturmischklappe 24 durch die die Temperatur des Kopfraums bei gleichbleibender Temperatur des Fußraums geändert werden kann.

Auch in einem derartigen Fall ändert sich das Ausgangssignal des Innenraumtemperaturfühlers 18 als Folge dieser Temperaturänderung. Um nun ein Nachregeln durch Ansteuern der Stellglieder 3 und 4 durch den Regler 16 zu vermeiden, ist das Ausgangssignal des Sollwertgebers 21 ebenfalls auf die Addierstelle 13 geführt. Über den Halbierer 14 gelangt das Ausgangssignal des Sollwertgebers 21 zum Verzögerungsnetzwerk 15, das dort zu einer Änderung des Sollwertgebers 21 ein zeitlich veränderliches Ausgangssingal liefert, dessen Änderung der ausgangsseitigen Änderung des Innenraumtemperaturfühlers 18 zumindest annähernd gleich ist. Auf diese Weise ist es möglich, zusätzlich zur Änderung der Temperatur auf einer Seite des Fahrzeuginnenraums auch die Temperatur im Kopfbereich gegenüber dem Fußbereich zu verändern. Der jeweils andere Bereich des Fahrgastraums 19 bleibt bei einer derartigen Änderung in seiner Temperatur unverändert.

**Patentansprüche**

1. Regeleinrichtung für eine Heiz- oder Klimaanlage von Kraftfahrzeugen, mit zwei verschiedenen Bereichen des Innenraums zugeordneten Wärmetauschern oder Wärmetauscherbereichen, die jeweils durch ein Stellglied entsprechend einem zugeordneten Sollwertgeber gesteuert oder eingeschaltet sind, mit einem Regler, der die Stellglieder steuert und an dessen Eingang ein einziger Innentemperaturfühler und die beiden Sollwertgeber angeschlossen sind, und mit Mitteln bei einer Verstellung eines Sollwertgebers eine Verstellung des Stellglieds für den jeweils anderen Wärmetauscher zu vermeiden, dadurch gekennzeichnet, daß die Stellglieder (3 und 4) durch die zugehörigen Sollwertgeber (1 und 2) direkt angesteuert sind, daß ein Verzögerungsnetzwerk (15) angesteuert von den Sollwertgebern (1 und 2) ein dem Ausgangssignal des Innentemperaturfühlers entsprechendes Ausgangssignal erzeugt und daß die Differenz aus dem Ausgangssignal des Verzögerungsnetzwerks und des Innentemperaturfühlers dem Regler (16) zugeführt ist.

2. Einrichtung nach Anspruch 1, dadurch gekennzeichnet, daß die Verzögerung einen konstanten zeitlichen Wert besitzt.

3. Einrichtung nach Anspruch 1, dadurch gekennzeichnet, daß die Verzögerung einen veränderlichen zeitlichen Wert besitzt.

4. Einrichtung nach Anspruch 3, dadurch gekennzeichnet, daß das Verzögerungsmittel (15) eine in Abhängigkeit vom Ausgangssignal der Sollwertgeber variable Verzögerung besitzt.

5. Einrichtung nach Anspruch 3 oder 4, dadurch gekennzeich. net, daß die Verzögerung von der Heizleistung abhängt.

6. Einrichtung nach Anspruch 5, dadurch gekennzeichnet, daß die Verzögerung von der über den Wärmetauscher geführten Luftmenge abhängt.

7. Einrichtung nach Anspruch 6, dadurch gekennzeichnet, daß die Verzögerung mit Hilfe eines Luftmengenwählers (27) einstellbar ist.

8. Einrichtung nach einem der Ansprüche 1 bis 7, dadurch gekennzeichnet, daß das Ausgangssignal eines weiteren Sollwertgebers (21) für eine überlagerte Temperatureinstellung auf das Verzögerungsnetzwerk geführt ist.

9. Einrichtung nach Anspruch 8, dadurch gekennzeichnet, daß der weitere Sollwertgeber (21) die Temperaturänderung des Kopfbereichs gegenüber dem Fußbereich des Fahrzeuginnenräums (19) steuert.

## Claims

1. Regulating apparatus for a heating or air-conditioning installation in motor vehicles, comprising heat exchangers or heat exchanger zones, allocated to two different regions of the interior, which are each controlled or switched on by a setting member according to an associated ideal value setting means, a regulator which controls the setting members and to the input of which a single internal temperature sensor and the two ideal value setting means are connected, and means for avoiding - in the case of an adjustement of one ideal value setting means - an adjustment of the setting member for the other heat exchanger in each case, characterised in that the setting members (3 and 4) are actuated directly by the respective ideal value setting means (1 and 2), that a delay network (15) actuated by the ideal value setting means (1 and 2) generates an output signal corresponding to the output signal of the internal temperature sensor and that the difference between the output signal of the delay network and that of the internal temperature sensor is fed to the regulator (16).

2. Apparatus according to Claim 1, characterised in that the delay has a constant time value.

3. Apparatus according to Claim 1, characterised in that the delay has a variable time value.

4. Apparatus according to Claim 3, characterised in that the delay means (15) have a delay which is variable in dependence upon the output signal of the ideal value setting means.

5. Apparatus according to Claim 3 or 4, characterised in that the delay depends upon the heating output.

6. Apparatus according to Claim 5, characterised in that the delay depends upon the quantity of air conducted through the heat exchanger.

7. Apparatus according to Claim 6, characterised in that the delay is adjustable with the aid of an air qantity selector (27).

8. Apparatus according to any one of Claims 1 to 7, characterised in that the output signal of a further ideal value setting means (21) is conducted to the delay network for a superimposed temperatur adjustment.

9. Apparataus according to Claim 8, characterised in that the further ideal value setting means (21) control the temeprature variation of the head region in comparison with the foot region of the interior (19) of the vehicle.

## Revendications

1. Dispositif de régulation pour une installation de chauffage et de climatisation de véhicules automobiles, comportant deux échangeurs thermiques ou zones d'échangeurs thermiques correspondant à deux zones différentes de l'habitacle, respectivement pilotés ou mis en marche par un élément de positionnement en fonction d'un émetteur correspondant de valeur de consigne, comportant aussi un régulateur qui pilote les éléments de positionnement et à l'entrée duquel sont reliés un unique capteur de température interne et les deux emetteurs de valeur de consigne, et comportant aussi des moyens pour, lors d'un réglage d'un émetteur de valeur de consigne, éviter un réglage de l'élément de positionnement pour, respectivement, l'autre échangeur thermique, caractérisé en ce que les éléments de positionnement (3 et 4) sont directement pilotés par les émetteurs de valeur de consigne correspondants (1 et 2); en ce qu'un circuit de temporisation (15), pilote par les emetteurs de valeur de consigne (1 et 2), produit un signal de sortie correspondant au signal de sortie du capteur de temperature interne; et en ce que c'est la différence entre le signal de sortie du circuit de temporisation et le capteur de température interne que l'on envoie au regulateur (16).

2. Dispositif selon la revendication 1, caractérisé en ce que la temporisation comporte un retard de valeur constante.

3. Dispositif selon la revendication 1, caractérisé en ce que la temporisation comporte un retard de valeur variable.

4. Dispositif selon la revendication 3, caractérisé en ce que le moyen de temporisation (15) comporte un retard variable en fonction du signal de sortie de l'émetteur de valeur de consigne.

5. Dispositif selon la revendication 3 et la revendication 4, caractérisé en ce que la temporisation dépend de la puissance de chauffage.

6. Dispositif selon la revendication 5, caractérisé en ce que la temporisation dépend du débit d'air amené par l'échangeur thermique.

7. Dispositif selon la revendication 6, caractérisé en ce que la temporisation peut se régler à l'aide d'un sélecteur de débit d'air (27).

8. Dispositif selon l'une quelconque des revendications 1 à 7, caractérisé en ce que l'on amène au circuit de temporisation le signal de sortie d'un autre émetteur de valeur de consigne (21) en vue d'un réglage de température obtenu par superposition.

9. Dispositif selon la revendication 8, caractérisé en ce que l'autre émetteur de valeur de consigne (21) commande l'écart de temperature de la zone de tête par rapport à la zone de pied de l'habitacle du véhicule (19).

FIG.1

FIG.2

Soll

② ①  FIG.3A

t₁  t

③ ④  FIG.3B

t

Regler  $U_{out}$

⑯  FIG.3C

t

Innen  $U_{out}$

⑱  FIG.3D

t

$U_{out}$

⑮  FIG.3E

t

0 083 048

FIG.4